# EUROPEAN PATENT APPLICATION

(11) **EP 4 804 084 A1**
(43) Date of publication of application: **09.09.2026**
(21) Application number: 25225673.0
(22) Date of filing: 19.12.2025
(51) Int. Cl.: G06N 3/088, G06N 3/0464, G06N 3/045, G06N 3/048

(54) **METHOD AND SYSTEM FOR MULTI-SENSOR DATA FUSION USING CONTRASTIVE LEARNING BASED DEEP CONVOLUTIONAL TRANSFORM LEARNING**

(30) Priority: 05.03.2025 IN 202521019820
(71) Applicant: Tata Consultancy Services Limited, Mumbai, Maharashtra 400 021 (IN)
(72) Inventor: SAHU, Saurabh, 560066 Bangalore (IN); KUMAR, Kriti, 560066 Bangalore (IN); KUMAR, Achanna Anil, 560066 Bangalore (IN); CHANDRA, Mariswamy Girish, 560066 Bangalore (IN)
(74) Representative: Goddar, Heinz J.

(57) **Abstract**

Multi-sensor fusion combines data from different sensors to improve accuracy and reliability. Existing methods for multi-sensor fusion utilize Deep Neural Networks which need large, labeled datasets and heavy computational resources. Hence, present disclosure provide a method and system for multi-sensor data fusion using contrastive learning based deep convolutional transform learning for limited data. The method collects data from multiple sensors which is processed by Deep Convolutional Transform Learning (DCTL) encoders, each specific to a sensor, to extract sensor-specific features. Further, a DCTL loss is computed for each DCTL encoder, and a contrastive loss is computed between all feature pairs generated by the DCTL encoders. The method jointly optimizes parameters of the sensor-specific DCTL encoders and contrastive loss function to extract fused features effectively, enabling robust multi-sensor fusion with limited data.

## Description

### CROSS-REFERENCE TO RELATED APPLICATIONS AND PRIORITY

The present application claims priority from Indian application no. 202521019820, filed on March 5, 2025.

### TECHNICAL FIELD

The present invention generally relates to the field of multi-sensor data fusion, and, more particularly, to a method and system for multi-sensor data fusion using contrastive learning based deep convolutional transform learning.

### BACKGROUND

Single-sensor systems often face challenges associated with data uncertainties and inability to capture complex environmental conditions, leading to sub-optimal performance. These limitations are addressed through multi-modal data fusion, where information from multiple sensors with differing physical characteristics is combined to improve accuracy and reliability. This fusion enables a broader perspective of the environment and improves inferencing capabilities. As a result, multi-modal fusion is widely applied in areas such as computer vision, industrial manufacturing, medical diagnosis and robotics. Of late many applications utilize machine learning, particularly techniques based on Deep Neural Networks (DNNs) for performing fusion. While DNNs are effective at identifying complex patterns in data, their requirement for large, labeled datasets and heavy computational resources limits their scalability. Since manual labeling is both costly and time-consuming, these techniques are rendered unsuitable for real-world applications where the data is mostly unlabeled or partially labeled. The scenario becomes more challenging when the access to data itself is limited. To address the challenge of limited or partially labeled data, semi-supervised learning techniques have been extensively studied with a recent focus on Contrastive Learning (CL). CL has emerged as a powerful self-supervised technique that learns representations by maximizing similarity within positive pairs -samples derived from the same data instance, while minimizing similarity between negative pairs-samples drawn from different data instances. While some CL based methods use labels information to aid in representation learning, others learn representations in a fully unsupervised setting. The rich representations learned from these techniques provide improved classification performance even when the classifier is trained on limited labeled data. However, most existing CL techniques are designed for single-sensor data, where different data augmentations (like, jitter, permutation etc.) are employed to generate different views of the original sample. The encoder network is then trained to align these views, making them invariant to the applied augmentations. Single-sensor-based contrastive learning (CL) techniques face challenges with multimodal data due to their inability to effectively capture the heterogeneity that arises from samples generated by different sensor types. Addressing this heterogeneity requires a more specialized approach than the single encoder network used in typical single-sensor CL methods. To address this, a recent prior art *(*X. Ouyang et. al., "Cosmo: contrastive fusion learning with small data for multimodal human activity recognition, " in Proceedings of the 28th Annual International Conference on Mobile Computing and Networking, 2022*)* employs modality-specific encoders for each sensor, using a loss function to capture both consistent and complementary information across different modalities. However, the encoder architectures in the prior art are based on Convolutional Neural Networks (CNNs), where the learned filters are not guaranteed to be unique, resulting in redundant filters to be learned, thereby increasing the number of trainable parameters. Given the limited data scenario, this may result in overfitting.

Another recent work *(*Shengzhong Liu et.al. 2023. FOCAL: Contrastive Learning for Multimodal Time-Series Sensing Signals in Factorized Orthogonal Latent Space. https://doi.org/10.48550/arXiv.2310.20071*)* addresses multi-modal fusion through contrastive learning on time-series data. While the prior art employs modality-specific encoders based on Convolutional Neural Networks (CNNs), these encoders often learn redundant filters. This redundancy increases the number of trainable parameters, leading to a higher risk of overfitting, especially in limited data scenarios. Further, the prior art incorporates contrastive loss at 2 places for (i) shared space, and (ii) private space, along with orthogonality, and temporal structural constraints, resulting in significant computational overhead.

### SUMMARY

Embodiments of the present disclosure present technological improvements as solutions to one or more of the above-mentioned technical problems recognized by the inventors in conventional systems. For example, in one embodiment, a method for multi-sensor data fusion using contrastive learning based deep convolutional transform learning is provided for limited data. The method includes collecting a plurality of data points from each of a plurality of sensors and generating a plurality of sensor-specific global features by processing the plurality of data points from each of the plurality of sensors via a plurality of sensor-specific encoders. Each of the plurality of sensor-specific encoders is a Deep Convolutional Transform Learning (DCTL) encoder network comprising a plurality of layers of convolutional filters followed by a global maximum pooling layer. The plurality of data points are processed through the plurality of layers of corresponding sensor-specific encoders to obtain a plurality of associated intermediate features. The plurality of associated intermediate features of a last layer among the plurality of layers are fed as input to the global max pooling layer to obtain the plurality of sensor-specific global features. Further, the method includes computing a DCTL loss associated with each of the plurality of sensor-specific encoders based on the plurality of intermediate features associated with the last layer and determining a contrastive loss between all of a plurality of pairs of the sensor-specific global features among the plurality of sensor-specific global features. Furthermore, the method includes training the plurality of sensor-specific encoders using a combination of the DCTL loss associated with the plurality of sensor-specific encoders and the contrastive loss for multi-sensor data fusion.

In another aspect, a system for multi-sensor data fusion using contrastive learning based deep convolutional transform learning is provided for limited data. The system includes: a memory storing instructions; one or more communication interfaces; and one or more hardware processors coupled to the memory via the one or more communication interfaces, wherein the one or more hardware processors are configured by the instructions to collect a plurality of data points from each of a plurality of sensors and generate a plurality of sensor-specific global features by processing the plurality of data points from each of the plurality of sensors via a plurality of sensor-specific encoders. Each of the plurality of sensor-specific encoders is a Deep Convolutional Transform Learning (DCTL) encoder network comprising a plurality of layers of convolutional filters followed by a global maximum pooling layer. The plurality of data points are processed through the plurality of layers of corresponding sensor-specific encoders to obtain a plurality of associated intermediate features. The plurality of associated intermediate features of a last layer among the plurality of layers are fed as input to the global max pooling layer to obtain the plurality of sensor-specific global features. Further, the one or more hardware processors are configured by the instructions to compute a DCTL loss associated with each of the plurality of sensor-specific encoders based on the plurality of intermediate features associated with the last layer and determine a contrastive loss between all of a plurality of pairs of the sensor-specific global features among the plurality of sensor-specific global features. Furthermore, the one or more hardware processors are configured by the instructions to train the plurality of sensor-specific encoders using a combination of the DCTL loss associated with the plurality of sensor-specific encoders and the contrastive loss for multi-sensor data fusion.

In yet another aspect, there are provided one or more non-transitory machine-readable information storage mediums comprising one or more instructions which when executed by one or more hardware processors cause a method for multi-sensor data fusion using contrastive learning based deep convolutional transform learning for limited data. The method includes collecting a plurality of data points from each of a plurality of sensors and generating a plurality of sensor-specific global features by processing the plurality of data points from each of the plurality of sensors via a plurality of sensor-specific encoders. Each of the plurality of sensor-specific encoders is a Deep Convolutional Transform Learning (DCTL) encoder network comprising a plurality of layers of convolutional filters followed by a global maximum pooling layer. The plurality of data points are processed through the plurality of layers of corresponding sensor-specific encoders to obtain a plurality of associated intermediate features. The plurality of associated intermediate features of a last layer among the plurality of layers are fed as input to the global max pooling layer to obtain the plurality of sensor-specific global features. Further, the method includes computing a DCTL loss associated with each of the plurality of sensor-specific encoders based on the plurality of intermediate features associated with the last layer and determining a contrastive loss between all of a plurality of pairs of the sensor-specific global features among the plurality of sensor-specific global features. Furthermore, the method includes training the plurality of sensor-specific encoders using a combination of the DCTL loss associated with the plurality of sensor-specific encoders and the contrastive loss for multi-sensor data fusion.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates an exemplary block diagram of a system for multi-sensor data fusion using contrastive learning based deep convolutional transform learning, according to some embodiments of the present disclosure.
FIG. 2 is a flow diagram illustrating a method for multi-sensor data fusion using contrastive learning based deep convolutional transform learning, using the system of FIG. 1, according to some embodiments of the present disclosure.
FIG. 3 is a block diagram illustrating an example working of the method illustrated in FIG. 2, according to some embodiments of the present disclosure.
FIG. 4 is an example application of encoders trained using the method of FIG. 2 for classification task, according to some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Many industries use single-sensor systems that struggle with data uncertainties and cannot capture complex environmental conditions, resulting in lower performance. Multi-sensor fusion helps by combining data from different sensors to improve accuracy and reliability. This approach has proven valuable in fields like manufacturing, medical diagnosis, and robotics. Existing methods for multi-sensor fusion utilize machine learning, particularly techniques based on Deep Neural Networks (DNNs). While DNNs are effective at identifying complex patterns, their need for large, labeled datasets and heavy computational resources limits their scalability. Manual labeling is both costly and time-consuming, making these techniques unsuitable for real-world applications where data is mostly unlabeled or partially labeled, and the scenario is further complicated when access to data is limited. Hence, embodiments of present disclosure provide a method and system for multi-sensor data fusion using contrastive learning based deep convolutional transform learning. The method collects data from multiple sensors. Then, individual Deep Convolutional Transform Learning (DCTL) encoders, each specific to a sensor, extract features from multi-sensor data. The DCTL encoders learn sensor-specific, unique features are extracted or computed, thereby reducing redundancy. Further, a DCTL loss is computed for each DCTL encoder, and a contrastive loss is computed between all feature pairs generated by the DCTL encoders. The contrastive loss maximizes similarity between features from the same original sample across different sensors, while reducing similarity between features from different samples. The method jointly optimizes each of the sensor-specific DCTL encoder network parameters and contrastive loss function to extract fused features effectively, enabling robust multi-sensor fusion with limited data.

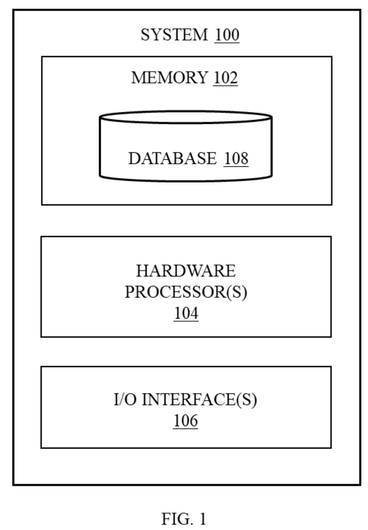

Referring now to the drawings, and more particularly to FIGS. 1 to 4, where similar reference characters denote corresponding features consistently throughout the figures, there are shown preferred embodiments, and these embodiments are described in the context of the following exemplary system and/or method.

FIG. 1 illustrates an exemplary block diagram of a system for multi-sensor data fusion using contrastive learning based deep convolutional transform learning, according to some embodiments of the present disclosure. In an embodiment, the system 100 includes one or more processors 104, communication interface device(s) 106 or Input/Output (I/O) interface(s) 106 or user interface 106, and one or more data storage devices or memory 102 operatively coupled to the one or more processors 104. The one or more processors 104 that are hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is configured to fetch and execute computer-readable instructions stored in the memory. In an embodiment, the system 100 can be implemented in a variety of computing systems, such as laptop computers, notebooks, hand-held devices, workstations, mainframe computers, servers, a network cloud, and the like.

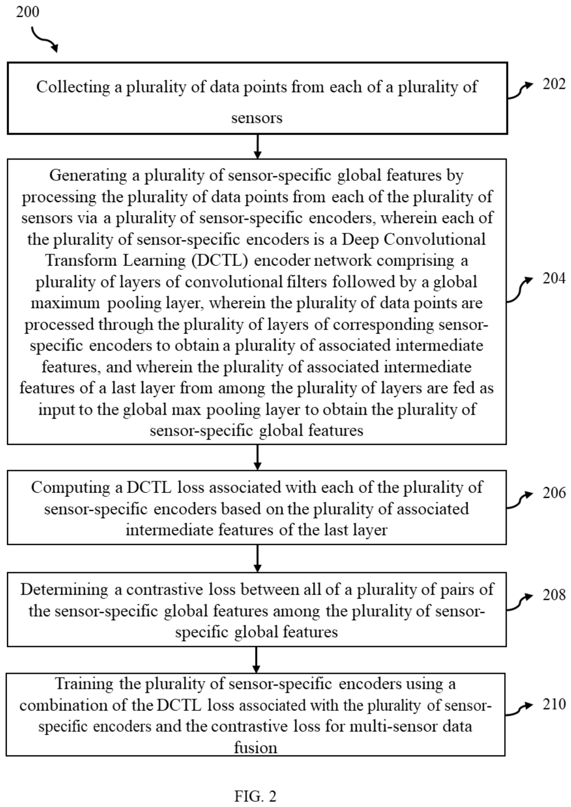

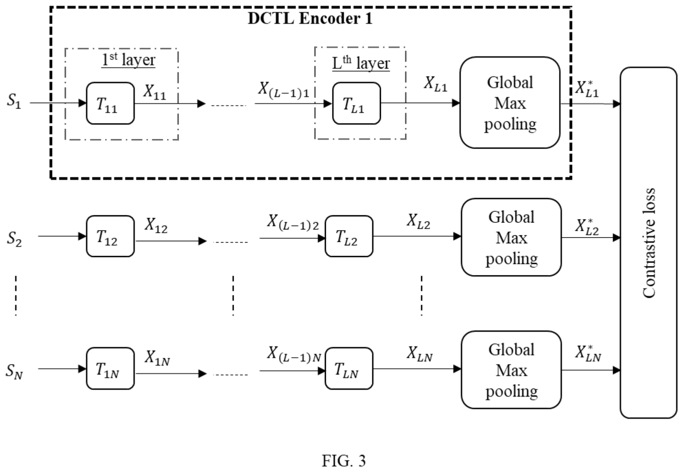

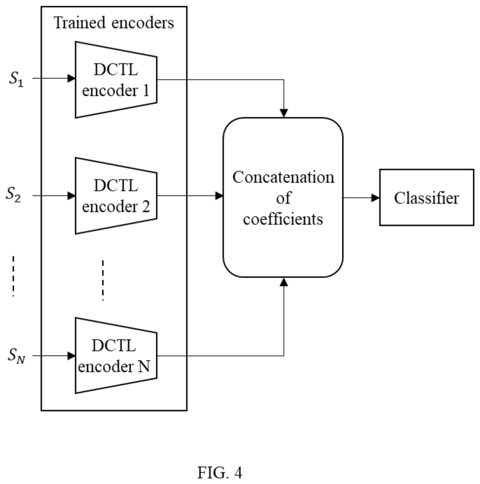

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. The memory 102 may include any computer-readable medium known in the art including, for example, volatile memory, such as Static Random-Access Memory (SRAM) and Dynamic Random-Access Memory (DRAM), and/or non-volatile memory, such as read only memory (ROM), erasable programmable ROM, flash memories, hard disks, optical disks, and magnetic tapes. The database 108 stores information pertaining to inputs fed to the system 100 and/or outputs generated by the system (e.g., at each stage), specific to the methodology described herein. Functions of the components of system 100 are explained in conjunction with flow diagram of FIG. 2, and block diagrams depicted in FIGS. 3 and FIG. 4, for multi-sensor data fusion using contrastive learning based deep convolutional transform learning.

In an embodiment, the system 100 comprises one or more data storage devices or the memory 102 operatively coupled to the processor(s) 104 and is configured to store instructions for execution of steps of the method 200 depicted in FIG. 2 by the processor(s) or one or more hardware processors 104. The steps of the method of the present disclosure will now be explained with reference to the components or blocks of the system 100 as depicted in FIG. 1, the flow diagram of FIG. 2, and the block diagram illustrated in FIG. 3 for multi-sensor data fusion using contrastive learning based deep convolutional transform learning. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

Convolutional Transform Learning (CTL) is a technique where a set of *M* independent convolutional filters ${\left\{{t}_{m}\right\}}_{m = 1}^{M}$ are learned from a plurality of data samples (alternatively referred to as data points) ${\left\{{s}_{k}\right\}}_{k = 1}^{K}$ with *K* measurements of length *d,* in an unsupervised manner. The learned convolutional filters extract features or coefficients ${\left\{{x}_{m , k}\right\}}_{m = 1}^{M}$ according to equation 1. In equation 1, * denotes a convolution operation and *ϕ* is a regularization function that penalizes the coefficients *x_{m,k}* to avoid overfitting. The matrix *T* is a concatenation of the filters [*t*₁|*t*₂|...|*t_{M}*], and *det*(*T*) represents its determinant. The hyperparameters *ε* and µ are positive real numbers for the additional constraints imposed on the filters in *T* for effective learning. While the *log det*(*T*) term in equation 1 ensures that the learned filters are unique (linearly independent), the ${\left‖T\right‖}_{F}^{2}$ term keeps the values bounded to balance the scale. ${min}_{{t}_{m} , {x}_{m , k}} \frac{1}{2} {\sum }_{k = 1}^{K} {\sum }_{m = 1}^{M} \left({\left‖{t}_{m}∗{s}_{k}-{x}_{m , k}\right‖}_{F}^{2}+ϕ\left({x}_{m , k}\right)\right) + ϵ {\left‖T\right‖}_{F}^{2} - μ log det \left(T\right)$

Rewriting equation 1 in matrix form results in equation 2, wherein *S* = [*s*₁|*s*₂|....|*sₖ*]*, X =* [*x*_{1,*k*}|*x*_{2,*k*}|....|*x_{M,k}*]_{1≤*k*≤*K*} and $T . S = \left(\begin{matrix}{t}_{1} ∗ {s}_{1} & … & {t}_{M} ∗ {s}_{1} \\ ⋮ & ⋮ & ⋮ \\ {t}_{1} ∗ {s}_{K} & … & {t}_{M} ∗ {s}_{K}\end{matrix}\right)$. Single layer CTL formulation given in equation 2 is transformed to Deep CTL (DCTL) by cascading multiple layers of convolutional filters together to produce coefficients. The DCTL formulation for an *L* layered network is expressed as in equation 3, where *l* = 1, 2, ..., *L* corresponds to different layers of the DCTL network and *X* represents coefficients of last layer of the DCTL network. ${min}_{T , X} \frac{1}{2} {\left‖T.S-X\right‖}_{F}^{2} + ϕ \left(X\right) + ϵ {\left‖T\right‖}_{F}^{2} - μ log det \left(T\right)$ ${min}_{{T}_{1} , {T}_{2} , … , {T}_{L} , X} \frac{1}{2} {\left‖\left({T}_{L}⋯\left({T}_{2}⋅\left({T}_{1}⋅S\right)\right)\right)-X\right‖}_{F}^{2} + ϕ \left(X\right) + {\sum }_{l = 1}^{L} \left\{ϵ{\left‖{T}_{l}\right‖}_{F}^{2}-μ log det\left({T}_{l}\right)\right\}$

FIG. 2 is a flow diagram illustrating a method 200 for multi-sensor data fusion using contrastive learning based deep convolutional transform learning, according to some embodiments of the present disclosure. The method 200 is explained in conjunction with block diagram of FIG. 3. At step 202 of the method 200, the one or more hardware processors 104 are configured to collect a plurality of data points from each of a plurality of sensors. For example, the plurality of data points are signals or sensor readings collected from wearable devices comprising sensors such as accelerometer and gyroscope. Further, at step 204 of the method 200, the one or more hardware processors 104 are configured to generate a plurality of sensor-specific global features by processing the plurality of data points from each of the plurality of sensors via a plurality of sensor-specific encoders (i.e., for each sensor there is an associated encoder into which the data points collected by the sensor are passed for generating corresponding sensor-specific features). As illustrated in FIG. 3, *S*₁, *S*₂, *.. , S_{N}* are the plurality of data points collected from sensor 1, sensor 2, ..., sensor N, respectively, and are fed into corresponding sensor-specific encoders. Each of the plurality of sensor-specific encoders is a Deep Convolutional Transform Learning (DCTL) encoder network comprising a plurality of layers of convolutional filters (*l* = 1, 2, ..., *L*) followed by a global maximum pooling layer. The plurality of data points are processed through the plurality of layers of corresponding sensor-specific encoders to obtain a plurality of associated intermediate features ([*X*₁₁*...X*_{*L*1}*,* [*X*₁₂...*X_{L2}*]*,* ...., [*X*₁*_{N}...X_{LN}*]) by passing output of the convolutional filters at each layer through a Rectified Linear Unit (ReLU) activation and a dropout layer. The plurality of associated intermediate features obtained from each layer after ReLU activation and dropout is passed through subsequent layers (as illustrated in FIG. 3). The plurality of associated intermediate features of the last layer are fed as input to the global max pooling layer to obtain the plurality of sensor-specific global features $\left({X}_{L 1}^{*},{X}_{L 2}^{*},…,{X}_{LN}^{*}\right)$.

Further, at step 206 of the method 200, the one or more hardware processors 104 are configured to compute a DCTL loss associated with each of the plurality of sensor-specific encoders based on the plurality of intermediate features associated with the last layer according to equation 4. In equation 4, *X_{Li}* represents intermediate features generated by filters *T_{Li}* comprised in *L*^{th} convolutional layer of *i*^{th} sensor-specific encoder among the plurality of sensor-specific encoders, *ε* and *µ* are hyperparameters, *Sᵢ* represents a plurality of data points collected from an *i^{th}* sensor among the plurality of sensors, and *ϕ* represents a regularization function that penalizes the intermediate features *X_{Li}* associated with the last layer to avoid overfitting. ${L}_{{DCTL}_{i}} = {min}_{{T}_{1 i} , … , {T}_{Li} , {X}_{Li}} \frac{1}{2} {\left‖\left({T}_{Li}…\left({T}_{2 i}⋅\left({T}_{1 i}⋅{S}_{i}\right)\right)\right)-{X}_{Li}\right‖}_{F}^{2} + ϕ \left({X}_{Li}\right) + {\sum }_{l = 1}^{L} \left\{\begin{matrix}ϵ {\left‖{T}_{li}\right‖}_{F}^{2} - \\ μlog \left(det\left({T}_{li}\right)\right)\end{matrix}\right\}$

At step 208 of the method 200, the one or more hardware processors 104 are configured to determine a contrastive loss between all of a plurality of pairs of the sensor-specific global features among the plurality of sensor-specific global features. The contrastive loss maximizes similarity between features from similar data points among the plurality of data points collected by the plurality of sensors at same time intervals while reducing similarity between features from different data points among the plurality of data points collected from the plurality of sensors at different time intervals. The contrastive loss between each of the plurality of pairs of the sensor-specific global features *(feature i, feature j)* is determined by firstly obtaining a first set of sensor-specific global features ${X}_{{L}_{i}}^{∗}$ from an *i^{th}* DCTL encoder and a second set of sensor-specific global features ${X}_{{L}_{j}}^{∗}$ from a *j*^{th} DCTL encoder over a time interval *d* and over the plurality of data points. Next, a plurality of positive feature pairs and a plurality of negative feature pairs are generated. The plurality of positive feature pairs are generated by pairing up each sensor-specific global feature in the first set with a sensor-specific global feature in the second set corresponding to same time interval over the plurality of data points. The plurality of negative feature pairs are generated by pairing up each feature in the first set of sensor-specific global features with all other sensor-specific global features in the first set of sensor-specific global features and all sensor-specific global features in the second set of sensor-specific global features corresponding to different time intervals over the plurality of data points. The positive and negative feature pairs are defined only on the basis of time intervals considered across sensors. Positive samples correspond to same time interval, suggesting that datapoints over this interval across sensors are aligned in time and relate to same state of a system. Negative samples correspond to different time intervals, suggesting that datapoints over these interval across sensors are not aligned in time and hence can relate to different states of the system.

Once the positive and negative feature pairs are generated, a loss for each sensor-specific global feature in the first set of sensor-specific global features is calculated based on similarity scores of i) an associated positive feature pair among the plurality of positive feature pairs and ii) the plurality of negative pairs according to equation 5. ${L}_{{CL}_{ij}^{p}} = - log \left(exp\left(s\left({x}_{Li}^{p}, {x}_{Lj}^{p}\right)/τ\right)⋅{\left(\begin{matrix}{\sum }_{q = 1 , q \neq p} exp \left(s\left({x}_{Li}^{p}, {x}_{Li}^{q}\right)/τ\right) + \\ {\sum }_{q = 1}^{K} exp \left(s\left({x}_{Li}^{p}, {x}_{Lj}^{q}\right)/τ\right)\end{matrix}\right)}^{- 1}\right)$

In equation 5, *s*(·) is a cosine similarity score, *τ* is a temperature parameter, ${x}_{Li}^{p}$ is a feature in the first set of sensor-specific global features, ${x}_{Lj}^{p}$ is its positive feature pair among the plurality of positive feature pairs, ${x}_{Li}^{q}$ is a negative pair generated from the first set of sensor-specific global features, ${x}_{Lj}^{q}$ is a negative pair generated from the second set of sensor-specific global features, *p* represents same time interval and *q* represents different time intervals. Finally, the calculated loss is averaged across all of the sensor-specific global features in the first set of sensor-specific global features to obtain the contrastive loss between the pair of sensor-specific global features (*feature i, feature j*). In an embodiment, the steps 206 and 208 are performed simultaneously to obtain DCTL loss and contrastive loss which are then used in the step 210. It has to be noted that the DCTL loss is computed for each sensor while the contrastive loss is applied to all pairs (*i, j*) where *i* ≠ *j* resulting in $\left(\begin{matrix}N \\ 2\end{matrix}\right)$ relationships.

At step 210, the one or more hardware processors 104 are configured to train the plurality of sensor-specific encoders using a combination of the DCTL loss associated with the plurality of sensor-specific encoders and the contrastive loss for multi-sensor data fusion by minimizing a loss function *L* computed according to equation 6. In equation 6, *L_{DCTLi}* is the DCTL loss of *i*^{th} encoder, *α* is a hyperparameter for controlling tradeoff between the DCTL loss and the contrastive loss, *L_{CLij}* is the contrastive loss between a pair of the sensor-specific global features (*feature i, feature j*), where *i* ≠ *j* , and *N* is the number of sensors. In an embodiment, the loss function is minimized using Adaptive Moment Estimation (ADAM) optimizer until it converges to the empirically calculated threshold. This completes the training process, and all *L*-layer convolutional filters for each sensor-specific encoder are learned. $L = {\sum }_{i = 1}^{N} {L}_{{DCTL}_{i}} + α {\sum }_{1 \leq i \leq j \leq N} {L}_{{CL}_{ij}}$

Once the sensor-specific encoders are trained, they can be used to extract sensor-specific features for new data points collected from the plurality of sensors. The sensor-specific features can be used for downstream tasks such as classification, regression and the like. FIG. 4 is an example application of encoders trained using method of FIG. 2 for classification task, according to some embodiments of the present disclosure. Features are extracted from the trained sensor-specific DCTL encoder networks and concatenated. These concatenated features are used to train a suitable off-the-shelf classifier with the limited labeled data to demonstrate the representation learning capability of the joint optimization from limited unlabeled training data provided by method 200.

### EXPERIMENTAL RESULTS

A. Datasets: Two datasets from different domains are used for evaluating the method 200. Details of the datasets are as follows:
1. Cylindrical Roller Bearing (CRB) *[*A. Kumar et.al., "Vibration and acoustic data for defect cases of the cylindrical roller bearing (nbc: Nu205e), " IEEE Dataport, 2022, Available online: https://ieee-dataport.org/documents/vibration-and-acoustic-data-defect-cases-cylindrical-roller-bearing-nbc-nu205e*]:* This is bearing fault classification dataset including vibration and acoustic signals from the NU205E cylindrical roller bearing, recorded at 70 kHz under 2050 rpm and 200 N load. It features three fault types-Roller Fault (RF), Outer-race Fault (OF), and Inner-race Fault (IF), each with five defect widths. For evaluating method 200, defect widths of 2.12 mm for RF, 1.97 mm for OF, and 2.03 mm for IF, are considered along with a healthy state for classification.
2. USC-HAD *[*M. Zhang and A. A. Sawchuk, "Usc-had: A daily activity dataset for ubiquitous activity recognition using wearable sensors, " in Proceedings of the 2012 ACM conference on ubiquitous computing, 2012, pp. 1036-1043, Available online: https://sipi.usc.edu/had/*]:* This is a human activity detection dataset collected using MotionNode sensing platform, with a 3-axis accelerometer and 3-axis gyrometer placed on the front of the right hip of each subject. It includes data from 14 subjects (7 female, 7 male, aged 21 to 49, mean age 30.1), sampled at 100 Hz. Each subject performed 12 activities: walking forward, right, left, downstairs, upstairs, running forward, sitting, jumping, sleeping, standing, and using an elevator (up and down), each repeated five times.

B. Baseline methods: Different state-of-the-art methods with single and multiple sensors are used to evaluate the performance of the method 200. They are broadly classified into following categories:
1. Single-sensor contrastive learning methods: These methods consider only single-sensor data: SimCLR-TS *[*J. Poppelbaum, G. S. Chadha, and A. Schwung, "Contrastive learning based self-supervised time-series analysis, " Applied Soft Computing, vol.117, p. 108397, 2022*],* TS-TCC [E. Eldele et.al., "Time-series representation learning via temporal and contextual contrasting, " in Proceedings of the Thirtieth International Joint Conference on Artificial Intelligence, IJCAI-21, Z.-H. Zhou, Ed. International Joint Conferences on Artificial Intelligence Organization, 8 2021, pp. 2352-2359*],* SemiTime [H. Fan et.al, "Semi-supervised time series classification by temporal relation prediction, " in ICASSP 2021, IEEE, 2021, pp. 3545-3549*.],* and TS-TFC [Z. Liu et.al, "Temporal-frequency co-training for time series semi-supervised learning, " in Proceedings of the AAAI Conference on Artificial Intelligence, vol. 37, no. 7, 2023, pp. 8923-8931*].* Both SimCLR-TS and TS-TCC learn representations using only unlabeled data, with SimCLR-TS employing a 1-dimensional CNNs as its encoder and TS-TCC utilizing a transformer-based encoder. In contrast, SemiTime and TS-TFC utilize label information for representation learning with CNNs based encoders.
2. Multi-sensor contrastive learning method: Cosmo [X. Ouyang et.al, "Cosmo: contrastive fusion learning with small data for multimodal human activity recognition, " in Proceedings of the 28th Annual International Conference on Mobile Computing and Networking, 2022, pp. 324-337] is a feature fusion contrastive learning method designed to extract consistent information from multimodal timeseries data. It uses separate modality encoders to efficiently learn representations from each sensor.

C. Experimental details and Results: The method 200 is implemented with *N* = 2 is used for both datasets (i.e., with 2 sensor-specific DCTL encoders), as they both have two sensors. Classification performance is evaluated through accuracy scores and the results are presented in Tables 1 and 2 for the CRB and USC-HAD datasets, respectively. Both datasets are divided into class-balanced training and test sets, with varying percentages of labeling applied to the training data. It is to be noted that since the method 200 does not require label information, the DCTL encoders are learned using the entire training data, while the classifier is learned only on the labeled instances of the training data.

**Table 1**

| Methods | Training data | | |
|---|---|---|---|
| | 10% | 30% | 50% |
| Single-Sensor Contrastive Learning Methods | | | |
| SimCLR-TS (S₁) | 0.633 | 0.813 | 0.852 |
| SimCLR-TS (S₂) | 0.706 | 0.810 | 0.841 |
| TS-TCC (S₁) | 0.543 | 0.728 | 0.797 |
| TS-TCC (S₂) | 0.684 | 0.777 | 0.815 |
| SemiTime (S₁) | 0.631 | 0.817 | 0.879 |
| SemiTime (S₂) | 0.696 | 0.853 | 0.883 |
| TS-TFC (S₁) | 0.550 | 0.598 | 0.850 |
| TS-TFC (S₂) | 0.541 | 0.750 | 0.899 |

| Multi-Sensor Contrastive Learning Methods | | | |
|---|---|---|---|
| SimCLR-TS (Late Fusion) | 0.755 | 0.873 | 0.905 |
| Cosmo | 0.750 | 0.897 | 0.942 |
| Method 200 | **0.948** | **0.950** | **0.951** |

**Table 2**

| Methods | Training data | | | |
|---|---|---|---|---|
| | 10% | 20% | 30% | 40% |
| Single-Sensor Contrastive Learning Methods | | | | |
| SimCLR-TS (S₁) | 0.293 | 0.477 | 0.482 | 0.484 |
| SimCLR-TS (S₂) | 0.324 | 0.335 | 0.365 | 0.370 |
| TS-TCC (S₁) | 0.454 | 0.483 | 0.544 | 0.607 |
| TS-TCC (S₂) | 0.410 | 0.455 | 0.472 | 0.509 |
| SemiTime (S₁) | 0.418 | 0.500 | 0.534 | 0.566 |
| SemiTime (S₂) | 0.456 | 0.549 | 0.532 | 0.546 |
| TS-TFC (S₁) | 0.482 | 0.497 | 0.522 | 0.575 |
| TS-TFC (S₂) | 0.427 | 0.519 | 0.514 | 0.540 |

| Multi-Sensor Contrastive Learning Methods | | | | |
|---|---|---|---|---|
| SimCLR-TS (Late Fusion) | 0.430 | 0.485 | 0.522 | 0.542 |
| Cosmo | 0.502 | 0.530 | 0.617 | **0.670** |
| Method 200 | **0.510** | **0.599** | **0.633** | 0.665 |

The best results of the method 200 are achieved with a 3-layer DCTL encoder with 32, 64, and 96 convolutional filters, ReLU activation, and a 0.1 dropout rate. ADAM optimizer with a learning rate of 0.001 and a batch size of 64 is used. Hyper-parameters for the encoder networks are optimized through a grid search to determine the best values for each dataset. Analysis on each dataset is as follows:
1. CRB dataset: The raw sensor data from both the sensors is initially segmented into non-overlapping windows of 4096 samples and then normalized using min-max normalization. For the 3-layer DCTL encoder network, kernel filter sizes of 24, 16, and 8 are applied to layers 1, 2, and 3, respectively, for each sensor. The optimal hyperparameters are *α* = 1, *µ = σ* = 10⁻⁴, and *τ* = 0.1. The training is carried out for 500 epochs after which convergence is observed.
*2. USC-HAD dataset:* The raw sensor data for both the sensors is divided into 2-second time window for all the 3 axes and concatenated, resulting in 600 samples for each sensor. The data is normalized using Z-score normalization. Here, the data samples from 10 subjects are used for training, while samples from the remaining four subjects are used for testing. For the 3-layer DCTL encoder network, kernel filter sizes of 8, 16, and 24 are applied to layers 1, 2, and 3, respectively. The optimal hyperparameter values of *α* = 0.1, *µ* = *σ* = 10⁻⁴ and *τ* = 1 are used to generate the results. Here, the training is carried out for 40 epochs after which convergence is observed. For this dataset, a 2-layer MLP (Multi-Layer Perceptron) classifier with [48, 12] hidden neurons is used instead of a linear classifier for improved classification results.

D. Results Discussion: Table 1 summarizes classification results from five-fold cross-validation with a linear classifier trained on 10%, 30%, and 50% of labeled data. In table 1, *S*₁ refers to vibration sensor data, and *S*₂ refers to acoustic sensor data. Table 2 shows results from different methods using 10%, 20%, 30%, and 40% of labeled data, where *S*₁ denotes 3-axis accelerometer data and *S*₂ denotes 3-axis gyrometer data. The best-performing methods in both tables are highlighted in bold. Results indicate that the method 200 consistently outperforms other methods, demonstrating its effectiveness for multi-modal representation learning.

It can be observed from Tables 1 and 2 that multi-sensor based methods which fuse data from both sensors show improved performance compared to single-sensor based methods. To highlight the importance of joint multi-modal learning in the method 200, late fusion results for one of the benchmark technique, SimCLR-TS is provided for comparison, since it does not utilize label information for representation learning similar to the method 200. In late fusion, features from separate encoders are concatenated and fed into an external classifier. It can be seen that late fusion of SimCLR-TS outperforms its respective single sensor method for both the datasets, but shows poor performance compared to Cosmo and method 200. This is due to its inability to capture multi-modal correlations that the method 200 and Cosmo handle efficiently through the joint optimization. When compared against Cosmo, the method 200 demonstrates superior performance especially for lower percentage of labeled data while a comparable performance is observed for higher percentage of labeled data (≥40%) for both the datasets. The results demonstrate the fact that diversity promoting DCTL based encoders exploit the complex relationship between multi-modal data in a better way that enables a robust classifier to be learned even with 10% labeled data.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, non-volatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (200), comprising:
collecting (202), via one or more hardware processors, a plurality of data points from each of a plurality of sensors;
generating (204), via the one or more hardware processors, a plurality of sensor-specific global features by processing the plurality of data points from each of the plurality of sensors via a plurality of sensor-specific encoders, wherein each of the plurality of sensor-specific encoders is a Deep Convolutional Transform Learning (DCTL) encoder network comprising a plurality of layers of convolutional filters followed by a global maximum pooling layer, wherein the plurality of data points are processed through the plurality of layers of corresponding sensor-specific encoders to obtain a plurality of associated intermediate features, and wherein the plurality of associated intermediate features of a last layer from among the plurality of layers are fed as input to the global max pooling layer to obtain the plurality of sensor-specific global features;
computing (206), via the one or more hardware processors, a DCTL loss associated with each of the plurality of sensor-specific encoders based on the plurality of associated intermediate features of the last layer;
determining (208), via the one or more hardware processors, a contrastive loss between all of a plurality of pairs of the sensor-specific global features among the plurality of sensor-specific global features; and
training (210), via the one or more hardware processors, the plurality of sensor-specific encoders using a combination of the DCTL loss associated with the plurality of sensor-specific encoders and the contrastive loss for multi-sensor data fusion.

2. The method as claimed in claim 1, wherein the DCTL loss associated with each of the plurality of sensor-specific encoders is computed as: ${L}_{{DCTL}_{i}} = {min}_{{T}_{1 i} , … , {T}_{Li} , {X}_{Li}} \frac{1}{2} {\left‖\left({T}_{Li}…\left({T}_{2 i}⋅\left({T}_{1 i}⋅{S}_{i}\right)\right)\right)-{X}_{Li}\right‖}_{F}^{2} + ϕ \left({X}_{Li}\right) +$ ${\sum }_{l = 1}^{L} \left\{ϵ{\left‖{T}_{li}\right‖}_{F}^{2}-μlog\left(det\left({T}_{li}\right)\right)\right\}$, wherein *X_{Li}* represents intermediate features generated by filters *T_{Li}* comprised in *L*^{th} convolutional layer of *i*^{th} sensor-specific encoder among the plurality of sensor-specific encoders, *ε* and µ are hyperparameters, *Sᵢ* represents a plurality of data points collected from an *i^{th}* sensor among the plurality of sensors, and *ϕ* represents a regularization function that penalizes the intermediate features to avoid overfitting.

3. The method as claimed in claim 1, wherein the contrastive loss maximizes similarity between features from similar data points among the plurality of data points across the plurality of sensors and reduces similarity between features from different data points among the plurality of data points collected from the plurality of sensors.

4. The method as claimed in claim 1, wherein determining the contrastive loss between each of the plurality of pairs of the sensor-specific global features (*feature i, feature j*) comprises:
obtaining a first set of sensor-specific global features ${X}_{{L}_{i}}^{∗}$ from an *i*^{th} DCTL encoder and a second set of sensor-specific global features ${X}_{{L}_{j}}^{∗}$ from a *j*^{th} DCTL encoder over a time interval d and over the plurality of data points;
generating a plurality of positive feature pairs by pairing up each sensor-specific global feature in the first set with a sensor-specific global feature in the second set corresponding to same time interval over the plurality of data points;
generating a plurality of negative feature pairs by pairing up each feature in the first set of sensor-specific global features with all other sensor-specific global features in the first set of sensor-specific global features and all sensor-specific global features in the second set of sensor-specific global features corresponding to different time intervals over the plurality of data points;
calculating a loss for each sensor-specific global feature in the first set of sensor-specific global features based on similarity scores of i) an associated positive feature pair among the plurality of positive feature pairs and ii) the plurality of negative pairs as: ${L}_{{CL}_{ij}^{p}} = - log \left(exp\left(s\left({x}_{Li}^{p}, {x}_{Lj}^{p}\right)/τ\right)\right) ⋅$ $\left({\sum }_{q = 1 , q \neq p} exp \left(s\left({x}_{Li}^{p}, {x}_{Li}^{q}\right)/τ\right)\right) + {\sum }_{q = 1}^{K} exp {\left(s\left({x}_{Li}^{p}, {x}_{Lj}^{q}\right)/τ\right)}^{- 1}$, wherein *s*(·) is a cosine similarity score, *τ* is a temperature parameter, ${x}_{Li}^{p}$ is a feature in the first set of sensor-specific global features, ${x}_{Lj}^{p}$ is its positive feature pair among the plurality of positive feature pairs, ${x}_{Li}^{q}$ is a negative pair generated from the first set of sensor-specific global features, and ${x}_{Lj}^{q}$ is a negative pair generated from the second set of sensor-specific global features; and
averaging the calculated loss across all of the sensor-specific global features in the first set of sensor-specific global features to obtain the contrastive loss between the pair of sensor-specific global features *(feature i, feature j).*

5. The method as claimed in claim 1, wherein training the plurality of sensor-specific encoders based on a combination of the DCTL loss and the contrastive loss comprises minimizing a loss function *L* computed as: $L = {\sum }_{i = 1}^{N} {L}_{{DCTL}_{i}} + α {\sum }_{1 \leq i \leq j \leq N} {L}_{{CL}_{ij}}$ *,* wherein *L_{DCTLi}* is the DCTL loss of *i*^{th} encoder, *α* is a hyperparameter for controlling tradeoff between the DCTL loss and the contrastive loss, *L_{CLij}* is the contrastive loss between a pair of the sensor-specific global features *(feature i,feature j),* where *i* ≠ *j* , and *N* is the number of sensors.

6. A system (100), comprising:
a memory (102) storing instructions;
one or more Input/Output (I/O) interfaces (106); and
one or more hardware processors (104) coupled to the memory (102) via the one or more communication interfaces (106), wherein the one or more hardware processors (104) are configured by the instructions to:
collect a plurality of data points from each of a plurality of sensors;
generate a plurality of sensor-specific global features by processing the plurality of data points from each of the plurality of sensors via a plurality of sensor-specific encoders, wherein each of the plurality of sensor-specific encoders is a Deep Convolutional Transform Learning (DCTL) encoder network comprising a plurality of layers of convolutional filters followed by a global maximum pooling layer, wherein the plurality of data points are processed through the plurality of layers of corresponding sensor-specific encoders to obtain a plurality of associated intermediate features, and wherein the plurality of associated intermediate features of a last layer from among the plurality of layers are fed as input to the global max pooling layer to obtain the plurality of sensor-specific global features;
compute a DCTL loss associated with each of the plurality of sensor-specific encoders based on the plurality of associated intermediate features of the last layer;
determine a contrastive loss between all of a plurality of pairs of the sensor-specific global features among the plurality of sensor-specific global features; and
train the plurality of sensor-specific encoders using a combination of the DCTL loss associated with the plurality of sensor-specific encoders and the contrastive loss for multi-sensor data fusion.

7. The system as claimed in claim 6, wherein the DCTL loss associated with each of the plurality of sensor-specific encoders is computed as: ${L}_{{DCTL}_{i}} = {min}_{{T}_{1 i} , … , {T}_{Li} , {X}_{Li}} \frac{1}{2} {\left‖\left({T}_{Li}…\left({T}_{2 i}⋅\left({T}_{1 i}⋅{S}_{i}\right)\right)\right)-{X}_{Li}\right‖}_{F}^{2} + ϕ \left({X}_{Li}\right) +$ ${\sum }_{l = 1}^{L} \left\{ϵ{\left‖{T}_{li}\right‖}_{F}^{2}-μlog\left(det\left({T}_{li}\right)\right)\right\}$, wherein *X_{Li}* represents intermediate features generated by filters *T_{Li}* comprised in *L*^{th} convolutional layer of *i*^{th} sensor-specific encoder among the plurality of sensor-specific encoders, *ε* and *µ* are hyperparameters, *Sᵢ* represents a plurality of data points collected from an *i^{th}* sensor among the plurality of sensors, and *ϕ* represents a regularization function that penalizes the intermediate features to avoid overfitting.

8. The system as claimed in claim 6, wherein the contrastive loss maximizes similarity between features from similar data points among the plurality of data points across the plurality of sensors and reduces similarity between features from different data points among the plurality of data points collected from the plurality of sensors.

9. The system as claimed in claim 6, wherein the one or more hardware processors are configured to determine the contrastive loss between each of the plurality of pairs of the sensor-specific global features (*feature i, feature j*) by:
obtaining a first set of sensor-specific global features ${X}_{{L}_{i}}^{∗}$ from an *i*^{th} DCTL encoder and a second set of sensor-specific global features ${X}_{{L}_{j}}^{∗}$ from a *j*^{th} DCTL encoder over a time interval *d* and over the plurality of data points;
generating a plurality of positive feature pairs by pairing up each sensor-specific global feature in the first set with a sensor-specific global feature in the second set corresponding to same time interval over the plurality of data points;
generating a plurality of negative feature pairs by pairing up each feature in the first set of sensor-specific global features with all other sensor-specific global features in the first set of sensor-specific global features and all sensor-specific global features in the second set of sensor-specific global features corresponding to different time intervals over the plurality of data points;
calculating a loss for each sensor-specific global feature in the first set of sensor-specific global features based on similarity scores of i) an associated positive feature pair among the plurality of positive feature pairs and ii) the plurality of negative pairs as: ${L}_{{CL}_{ij}^{p}} = - log \left(exp\left(s\left({x}_{Li}^{p}, {x}_{Lj}^{p}\right)/τ\right)\right) ⋅$ $\left({\sum }_{q = 1 , q \neq p} exp \left(s\left({x}_{Li}^{p}, {x}_{Li}^{q}\right)/τ\right)\right) + {\sum }_{q = 1}^{K} exp {\left(s\left({x}_{Li}^{p}, {x}_{Lj}^{q}\right)/τ\right)}^{- 1}$, wherein *s*(·) is a cosine similarity score, *τ* is a temperature parameter, ${x}_{Li}^{p}$ is a feature in the first set of sensor-specific global features, ${x}_{Lj}^{p}$ is its positive feature pair among the plurality of positive feature pairs, ${x}_{Li}^{q}$ is a negative pair generated from the first set of sensor-specific global features, and ${x}_{Lj}^{q}$ is a negative pair generated from the second set of sensor-specific global features; and
averaging the calculated loss across all of the sensor-specific global features in the first set of sensor-specific global features to obtain the contrastive loss between the pair of sensor-specific global features (*feature i, feature j*).

10. The system as claimed in claim 6, wherein the one or more hardware processors are configured to train the plurality of sensor-specific encoders based on a combination of the DCTL loss and the contrastive loss by minimizing a loss function *L* computed as: $L = {\sum }_{i = 1}^{N} {L}_{{DCTL}_{i}} + α {\sum }_{1 \leq i \leq j \leq N} {L}_{{CL}_{ij}}$, wherein *L_{DCTLi}* is the DCTL loss of *i*^{th} encoder, *α* is a hyperparameter for controlling tradeoff between the DCTL loss and the contrastive loss, *L_{CLij}* is the contrastive loss between a pair of the sensor-specific global features *(feature i, feature j),* where *i* ≠ *j* , and *N* is the number of sensors.

11. One or more non-transitory machine-readable information storage mediums comprising one or more instructions which when executed by one or more hardware processors cause:
collecting a plurality of data points from each of a plurality of sensors;
generating a plurality of sensor-specific global features by processing the plurality of data points from each of the plurality of sensors via a plurality of sensor-specific encoders, wherein each of the plurality of sensor-specific encoders is a Deep Convolutional Transform Learning (DCTL) encoder network comprising a plurality of layers of convolutional filters followed by a global maximum pooling layer, wherein the plurality of data points are processed through the plurality of layers of corresponding sensor-specific encoders to obtain a plurality of associated intermediate features, and wherein the plurality of associated intermediate features of a last layer from among the plurality of layers are fed as input to the global max pooling layer to obtain the plurality of sensor-specific global features;
computing a DCTL loss associated with each of the plurality of sensor-specific encoders based on the plurality of associated intermediate features of the last layer;
determining a contrastive loss between all of a plurality of pairs of the sensor-specific global features among the plurality of sensor-specific global features; and
training the plurality of sensor-specific encoders using a combination of the DCTL loss associated with the plurality of sensor-specific encoders and the contrastive loss for multi-sensor data fusion.

12. The one or more non-transitory machine readable information storage mediums as claimed in claim 11, wherein the DCTL loss associated with each of the plurality of sensor-specific encoders is computed as: ${L}_{{DCTL}_{i}} = {min}_{{T}_{1 i} , … , {T}_{Li} , {X}_{Li}} \frac{1}{2} {\left‖\left({T}_{Li}…\left({T}_{2 i}⋅\left({T}_{1 i}⋅{S}_{i}\right)\right)\right)-{X}_{Li}\right‖}_{F}^{2} + ϕ \left({X}_{Li}\right) +$ ${\sum }_{l = 1}^{L} \left\{ϵ{\left‖{T}_{li}\right‖}_{F}^{2}-μlog\left(det\left({T}_{li}\right)\right)\right\}$, wherein *X_{Li}* represents intermediate features generated by filters *T_{Li}* comprised in *L*^{th} convolutional layer of *i*^{th} sensor-specific encoder among the plurality of sensor-specific encoders, *ε* and *µ* are hyperparameters, *Sᵢ* represents a plurality of data points collected from an *i^{th}* sensor among the plurality of sensors, and *ϕ* represents a regularization function that penalizes the intermediate features to avoid overfitting.

13. The one or more non-transitory machine readable information storage mediums as claimed in claim 11, wherein the contrastive loss maximizes similarity between features from similar data points among the plurality of data points across the plurality of sensors and reduces similarity between features from different data points among the plurality of data points collected from the plurality of sensors.

14. The one or more non-transitory machine readable information storage mediums as claimed in claim 11, wherein determining the contrastive loss between each of the plurality of pairs of the sensor-specific global features (*feature i, feature j*) comprises:
obtaining a first set of sensor-specific global features ${X}_{{L}_{i}}^{∗}$ from an *i*^{th} DCTL encoder and a second set of sensor-specific global features ${X}_{{L}_{j}}^{∗}$ from a *j*^{th} DCTL encoder over a time interval *d* and over the plurality of data points;
generating a plurality of positive feature pairs by pairing up each sensor-specific global feature in the first set with a sensor-specific global feature in the second set corresponding to same time interval over the plurality of data points;
generating a plurality of negative feature pairs by pairing up each feature in the first set of sensor-specific global features with all other sensor-specific global features in the first set of sensor-specific global features and all sensor-specific global features in the second set of sensor-specific global features corresponding to different time intervals over the plurality of data points;
calculating a loss for each sensor-specific global feature in the first set of sensor-specific global features based on similarity scores of i) an associated positive feature pair among the plurality of positive feature pairs and ii) the plurality of negative pairs as: ${L}_{{CL}_{ij}^{p}} = - log \left(exp\left(s\left({x}_{Li}^{p}, {x}_{Lj}^{p}\right)/τ\right)\right) .$ $\left({\sum }_{q = 1 , q \neq p} exp \left(s\left({x}_{Li}^{p}, {x}_{Li}^{q}\right)/τ\right)\right) + {\sum }_{q = 1}^{K} exp {\left(s\left({x}_{Li}^{p}, {x}_{Lj}^{q}\right)/τ\right)}^{- 1}$, wherein *s*(·) is a cosine similarity score, *τ* is a temperature parameter, ${x}_{Li}^{p}$ is a feature in the first set of sensor-specific global features, ${x}_{Lj}^{p}$ is its positive feature pair among the plurality of positive feature pairs, ${x}_{Li}^{q}$ is a negative pair generated from the first set of sensor-specific global features, and ${x}_{Lj}^{q}$ is a negative pair generated from the second set of sensor-specific global features; and
averaging the calculated loss across all of the sensor-specific global features in the first set of sensor-specific global features to obtain the contrastive loss between the pair of sensor-specific global features *(feature i,feature j).*

15. The one or more non-transitory machine readable information storage mediums as claimed in claim 11, wherein training the plurality of sensor-specific encoders based on a combination of the DCTL loss and the contrastive loss comprises minimizing a loss function *L* computed as: $L = {\sum }_{i = 1}^{N} {L}_{{DCTL}_{i}} + α {\sum }_{1 \leq i \leq j \leq N} {L}_{{CL}_{ij}}$ *,* wherein *L_{DCTLi}* is the DCTL loss of *i*^{th} encoder, *α* is a hyperparameter for controlling tradeoff between the DCTL loss and the contrastive loss, *L_{CLij}* is the contrastive loss between a pair of the sensor-specific global features (*feature i,feature j*), where *i* ≠ *j* , and *N* is the number of sensors.
